# EUROPÄISCHE PATENTSCHRIFT

(11) **EP 2 417 008 B1**
(45) Veröffentlichungstag und Bekanntmachung des Hinweises auf die Patenterteilung: **05.06.2019**
(21) Anmeldenummer: 10713447.0
(22) Anmeldetag: 08.04.2010
(51) Int. Cl.: B62D 53/08

(54) **VERFAHREN UND STEUERUNGSSYSTEM FÜR EINE SATTELKUPPLUNGSVERSCHIEBEEINRICHTUNG MIT ABSTANDSMESSUNG ZUM ERFASSEN VON HINDERNISSEN**
PROCESS AND CONTROL SYSTEM FOR A SLIDABLE FIFTH WHEEL OPERATING WITH DETECTION OF DISTANCE TO AN OBSTACLE
PROCÉDÉ ET MOYEN DE CONTRÔLE D'UNE SELLETTE COULISSANTE AJUSTABLE EN FONCTION DE LA DISTANCE À UN OBSTACLE DETECTÉE.

(30) Priorität: 09.04.2009 DE 102009002335
(43) Veröffentlichungstag der Anmeldung: 15.02.2012
(73) Patentinhaber: JOST-Werke Deutschland GmbH, 63263 Neu-Isenburg (DE)
(72) Erfinder: ALGÜERA GALLEGO, José, Manuel, 63739 Aschaffenburg (DE)
(74) Vertreter: Mehler Achler
(86) Internationale Anmeldenummer: PCT/EP2010/054661
(87) Internationale Veröffentlichungsnummer: WO 2010/115965

(56) Entgegenhaltungen:
- EP-A1- 1 559 607
- WO-A1-2005/027076
- WO-A1-2007/068762
- DE-A1- 10 128 792
- US-A- 3 848 914
- US-A1- 2004 061 598

## Beschreibung

Die Erfindung betrifft ein Verfahren zur Steuerung einer Verschiebeeinrichtung für eine auf einem Zugfahrzeug angeordnete Sattelkupplung gemäß den Merkmalen im Oberbegriff des Patentanspruchs 1. Darüber hinaus ist ein für das Durchführen des erfindungsgemäßen Verfahrens besonders geeignetes Steuerungssystem für eine Verschiebeeinrichtung unter Schutz gestellt.

Eine derartige Verschiebeeinrichtung ist beispielsweise aus der DE 10 2005 060 124 A1 bekannt geworden. Mit Hilfe einer motorischen Antriebseinheit kann ein Schlitten mit der darauf befindlichen Sattelkupplung in der Längsachse des Fahrzeugs auf zwei parallel verlaufenden Führungsschienen verfahren und in einer vorgesehenen Position verrastet werden. Bei schneller Autobahnfahrt ohne nennenswerte Kurven soll die Sattelkupplung möglichst nah an das Fahrerhaus gefahren werden, um den Spalt zwischen dem Fahrerhaus und der Aufliegerfront möglichst gering zu halten und Verwirbelungen in diesem Bereich zu minimieren. Gemäß der bekannten Druckschrift wird das Steuergerät der Verschiebeeinrichtung an das Fahrzeugsteuergerät angeschlossen, so dass Informationen bezüglich der Fahrgeschwindigkeit abgerufen werden können und somit im Regelbetrieb der Spalt zwischen Zugfahrzeug und Auflieger eingestellt werden kann. Hieraus resultiert jedoch das Problem, dass der möglichst nah an das Fahrerhaus herangezogene Auflieger bei engen Kurvenfahrten nicht ohne weiteres an dem Fahrerhaus vorbei schwenken kann, ohne mit den Ecken des Aufliegers gegen das Fahrerhaus zu schlagen. Dieses Problem soll auch bei einer Panikbremsung bestehen, das heißt einer plötzlichen Vollbremsung ohne Ausweichmanöver, die durch Auswertung eines in das Steuergerät eingehenden Bremssignals erkannt wird und eine äußerst schnelle Rückwärtsbewegung des Schlittens zum Vergrößern des Spaltmaßes auslöst.

Einen weiteren Stand der Technik offenbart die DE 10 2004 045 662 A1 mit einer Verschiebeeinrichtung, deren Schlittenposition von einem Positionssensor erfasst wird. Das Signal des Positionssensors wird einer Steuereinrichtung bereitgestellt, die bei Vorliegen eines zu geringen Spaltes zwischen Fahrerhaus und Aufliegerfront gegebenenfalls auch die Antriebseinheit der Verschiebeinrichtung in Gang setzt und dadurch den Schlitten zurückbewegt.

Aus der DE 101 28 792 A1 ist ein System zur Vermeidung von Kollisionen eines Fahrzeugs mit Hindernissen bekannt. Mittels von Sensoren wird die räumliche Umgebung des Fahrzeugs erfasst und die Signale der Sensoren in einer Datenverarbeitungseinrichtung dazu verwendet, einen hindernisfreien Fahrraum zu berechnen. Hierdurch soll eine mögliche Kollision vorhersagbar sein und der Fahrer durch eine Warneinrichtung auf die Kollisionsgefahr hingewiesen werden. Zur Unterstützung des Fahrers können auch direkte Eingriffe in die Fahrzeugsteuerung erfolgen.

Ein mit einem ähnlichen System arbeitendes Verfahren offenbart die EP 1 559 607 A1, bei dem eine Kollisionswarnung ausgegeben wird, sobald ein Mindestabstand zwischen einem Fahrzeug und einem vorausfahrenden Fahrzeug unterschritten wird. Die Kollisionswarnung kann auch dazu genutzt werden, eine automatische Bremsung des Fahrzeugs einzuleiten.

In der Praxis hat sich jedoch gezeigt, dass die Erfassung des Bremssignals und der Fahrgeschwindigkeit wenig geeignet sind, eine Panikbremsung rechtzeitig zu erkennen. Hierdurch ergeben sich für die Systeme äußerst kurze Reaktionszeiten, die häufig ein Zurückfahren der Sattelkupplung in eine hintere Position und damit den notwendigen Abstand des Aufliegers zu dem Fahrerhaus nicht mehr ermöglichen.

Aus diesem Grund lag der Erfindung die Aufgabe zugrunde, ein Verfahren und ein Steuerungssystem bereitzustellen, mit welchem ein rechtzeitiges Einstellen einer ausreichend großen Spaltweite zwischen Zugfahrzeug und Auflieger möglich ist.

Die Aufgabe wird erfindungsgemäß mit einem Verfahren gemäß der im Anspruch 1 stehenden Merkmale gelöst.

Bei den häufig verwendeten Verschiebeeinrichtungen wird der Schlitten auf zwei parallelen Führungsschienen mittels einer motorischen Antriebseinheit, wie beispielsweise einem Hydraulikzylinder, verfahren und nach Erreichen der vorgesehenen Position beidseitig an den Führungsschienen fixiert. Hierfür werden meistens mit einem Stellglied, beispielsweise einem pneumatisch oder hydraulisch beaufschlagbaren Zylinder, Blockierstücke in Richtung der Führungsschienen bewegt und jeweils formschlüssig mit dieser in Eingriff gebracht. Diese Verrastung des Schlittens auf den Führungsschienen entlastet insbesondere bei starken Bremsungen oder Kollisionen die motorische Antriebseinheit.

Anstelle einer formschlüssigen Verrastung ist es auch möglich, die motorische Antriebseinheit in ausreichender Größe zu dimensionieren und auf zusätzliche Formschlusselemente zu verzichten. Bei dieser Ausführungsform wird unter dem Stellglied ein Sperrventil verstanden, mit welchem das im Zylinderinnenraum befindliche Fluid eingeschlossen wird.

Während schneller Autobahnfahrt wird der Auflieger über die Verschiebeeinrichtung nah an das Fahrerhaus des Zugfahrzeugs herangezogen, um die Spaltweite zwischen Fahrerhaus und Aufliegerfront möglichst gering zu halten. Hierdurch werden Verwirbelungen und somit auch der Kraftstoffverbrauch minimiert. Im Falle eines plötzlichen Ausweichmanövers wird die Fixierung des Schlittens aufgehoben und der Schlitten auf den Führungsschienen zurückgedrückt. Mit Hilfe des erfindungsgemäßen Verfahrens wird bereits der vor dem Fahrzeug befindliche Straßenverlauf überwacht und gegebenenfalls darauf befindliche Hindernisse erkannt. Hierdurch ist es möglich, bereits vor der Reaktion des Fahrers Maßnahmen zum Vergrößern der Spaltweite zwischen Fahrerhaus und Aufliegerfront einzuleiten.

Dieses kann vorzugsweise derart erfolgen, dass bei Erreichen eines vorgebbaren ersten Reaktionsabstandes zu dem Hindernis die motorische Antriebseinheit und/oder das Stellglied von dem Steuergerät in eine Bereitschaftsstellung geschaltet werden. Sofern dann der Fahrer eine Vollbremsung gegebenenfalls mit einer starken Lenkbewegung ausübt, kann das Zurückfahren des Schlittens ohne zeitliche Verzögerung erfolgen.

In der Bereitschaftsstellung kann insbesondere eine Hydraulikpumpe der motorischen Antriebseinheit anlaufen. Dadurch steht der meistens als Hydraulikzylinder ausgebildeten motorischen Antriebseinheit sofort der notwendige Systemdruck zur Verfügung, um gegebenenfalls den Schlitten mit angekuppeltem Auflieger trotz eingeleitetem Bremsvorgang zurückschieben zu können.

Zweckmäßigerweise wird bei Erreichen eines vorgebbaren zweiten, kürzeren Reaktionsabstandes die Fixierung des Schlittens aufgehoben und der Schlitten von der motorischen Antriebseinheit in eine hintere Position geschoben. Bei diesem Szenario erfolgte keine Reaktion des Fahrers und der aus Zugfahrzeug und Auflieger gebildete Sattelzug nähert sich mit unverminderter Geschwindigkeit dem Hindernis an. In dieser Phase wird der Schlitten automatisch in eine gegenüber den Führungsschienen hintere Position gedrückt, da eine Vollbremsung und/oder ein scharfes Ausweichmanöver unvermeidbar erscheinen.

Vorteilhafterweise wird der Schlitten in der hinteren Position mittels des Stellgliedes fixiert. Insbesondere durch ein formschlüssiges Eingreifen an dem Stellglied befindlicher Blockierstücke in die Führungsschienen wird ein zusätzlicher Sicherheitsgewinn erreicht, da der Schlitten nicht ausschließlich von der motorischen Antriebseinheit gehalten wird.

Die Erfindung ist ebenfalls an einem Steuerungssystem gemäß der im Anspruch 6 stehenden Merkmale.

Vorzugsweise ist der Abstandssensor Bestandteil des zugfahrzeugseitigen Abstandserkennungssystems. Das Abstandserkennungssystem dient dem Erkennen von Hindernissen und leitet bei stetiger Annäherung des Sattelzuges ohne Reaktion des Fahrers selbsttätig einen Bremsvorgang ein. Sofern ein derartiges Abstandserkennungssystem vorhanden ist, kann das Steuergerät den benötigten Messwert aus diesem erhalten.

Dabei kann der Abstandssensor ein Radar-, Lidar- oder Infrarotsensor sein. Das Radarprinzip beruht auf der Basis elektromagnetischer Wellen im Radiofrequenzbereich, welche als so genanntes Primärsignal ausgesendet und von Objekten als reflektiertes Sekundärsignal empfangen und ausgewertet werden. Lidar steht für "light detection and ranging" und ist eine dem Radar sehr verwandte Methode zur Entfernungs- und Geschwindigkeitsmessung. Statt Funkwellen wie beim Radar werden jedoch Laserstrahlen verwendet.

Das Abstandshaltesystem kann auch Bestandteil des Spurhaltesystems sein oder ein solches umfassen. In diesem Fall stellt die Fahrstreifenbegrenzungslinie das Hindernis dar. Das Spurhaltesystem reagiert durch eine Signalgebung, wenn das Zugfahrzeug den Fahrstreifen ohne nennenswerten Lenkeinschlag verlässt. Auch dieses Signal kann dazu genutzt werden, das System in eine Bereitschaftsstellung zu versetzten und/oder ein Verfahren des Schlittens in eine hintere Position auszulösen, da nach einem Verlassen des Fahrstreifens beispielsweise durch Übermüdung des Fahrers häufig ein plötzliches Einlenken erfolgt, um das Zugfahrzeug auf die Fahrspur zu bringen.

Zum besseren Verständnis wird die Erfindung nachfolgend anhand von drei Figuren näher erläutert. Es zeigt die
- **Fig. 1:**: eine Seitenansicht auf ein Zugfahrzeug mit einer Verschiebeeinrichtung und angekuppeltem Auflieger gemäß des Standes der Technik;
- **Fig. 2:**: eine Unteransicht auf die in Figur 1 dargestellte Verschiebeeinrichtung und
- **Fig. 3:**: eine schematische Seitenansicht auf einen Sattelzug mit dem erfindungsgemäßen Steuerungssystem.

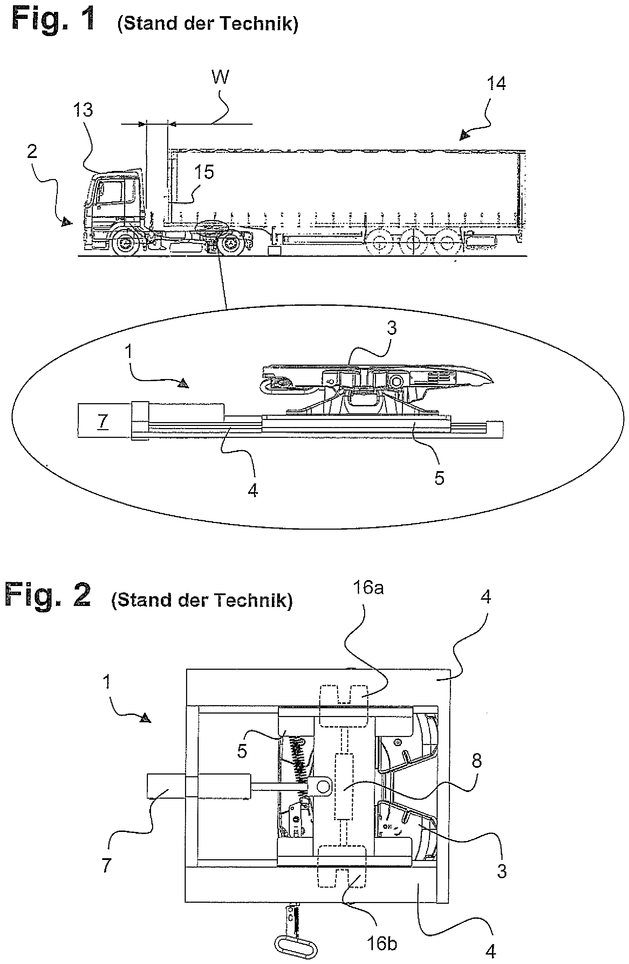

Die Figur 1 zeigt in einer schematischen Seitenansicht einen Sattelzug mit einem Zugfahrzeug 2 und einen daran mechanisch angekuppelten Auflieger 14. Die mechanische Verbindung zwischen den Fahrzeugen 2, 14 erfolgt über eine Sattelkupplung 3, die auf einem Schlitten 5 angeordnet ist und in der Fahrzeuglängsachse auf zwei parallel zueinander beabstandeten Führungsschienen 4 verfahren werden kann. Das Verfahren der Sattelkupplung 3 erfolgt während des Fahrbetriebes über eine eigens dafür vorgesehene motorische Antriebseinheit 7 in Form eines Hydraulikzylinders und dient in erster Linie dem Einstellen der Spaltweite W zwischen der Rückseite des Fahrerhauses 13 und der Aufliegerfront 15.

Die Verschiebeeinrichtung 1 ist in einer vergrößerten Unteransicht in Figur 2 zu erkennen. Auf dem Schlitten 5 befindet sich rechtwinklig zu den Führungsschienen 4 ein Stellglied 8 mit endseitig daran ausgebildeten Blockierstücken 16a, 16b, die in komplementäre Aufnahmen (nicht gezeigt) der Führungsschienen 4 formschlüssig eingreifen und dadurch den Schlitten 5 an den Führungsschienen 4 verriegeln. Vor einem Verfahren des Schlittens 5 mit der motorischen Antriebseinheit 7 werden die Blockierstücke 16a, 16b über das Stellglied 8 zurückgefahren, wodurch die mechanische Verrastung aufgehoben wird.

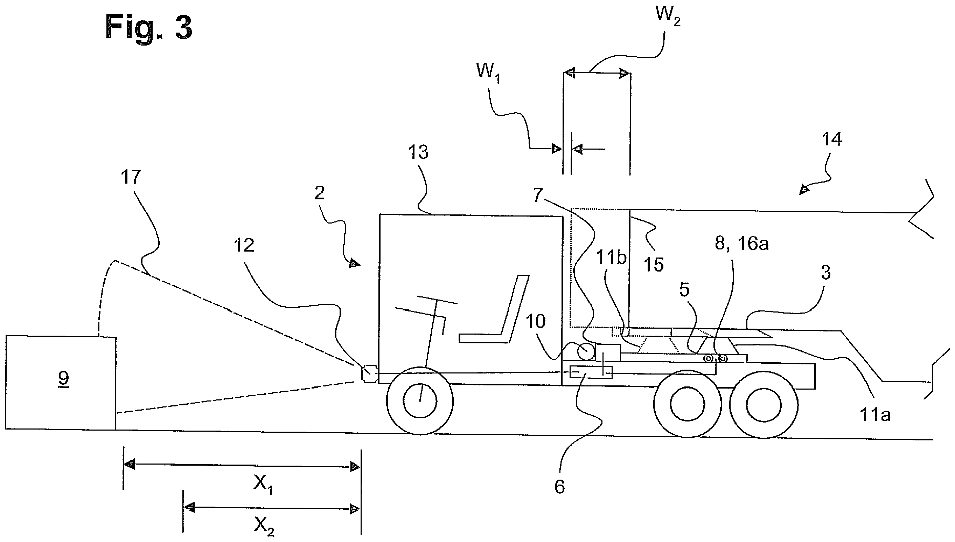

In der Figur 3 ist eine hintere Position 11a sowie eine vordere Position 11b des Schlittens 5 und somit der Aufliegerfront 15 zu erkennen, wobei aus Übersichtsgründen die vordere Position 11b mit gepunkteten Linien versehen ist. Mit der vorderen Position 11b korrespondiert die minimale Spaltweite W₁ und mit der hinteren Position 11a die maximale Spaltweite W₂. Die minimale Spaltweite W₁ ist dabei derart bemessen, dass ein vollständiges Schwenken der Aufliegerfront 15 ohne Kollision mit dem Fahrerhaus 13 nicht möglich wäre.

Das in Figur 3 dargestellte erfindungsgemäße Steuerungssystem umfasst einen auf der Vorderseite des Zugfahrzeugs 2 angeordneten Abstandssensor 12, welcher die vor dem Zugfahrzeug 2 liegende Straße hinsichtlich möglicher Hindernisse 9 überwacht. Hierfür sendet der Abstandssensor 12 eine Messkeule 17 vorauseilend in Fahrtrichtung des Zugfahrzeugs 2. Sobald der Abstandssensor 12 ein Hindernis im Reaktionsabstand X₁ detektiert, wird ein entsprechendes Signal an ein elektronisches Steuergerät 6 übermittelt, welches daraufhin die Hydraulikpumpe 10 oder einen vergleichbaren Motor in Betrieb setzt.

Sofern der Fahrer keine Reaktion zeigt und das Hindernis 9 sich bis auf den zweiten Reaktionsabstand X₂ angenähert hat, wird der Schlitten 5 mit dem Auflieger 14 durch die motorische Antriebseinheit 7 zurückgedrückt und die maximale Spaltweite W₂ eingestellt. Nach Herstellen der maximalen Spaltweite W₂ sind auch extreme Ausweichmanöver möglich, da die Aufliegerfront 15 an der Rückseite des Fahrerhauses 13 vorbeischwenken kann.

### Bezugszeichenliste

- 1: Verschiebeeinrichtung
- 2: Zugfahrzeug
- 3: Sattelkupplung
- 4: Führungsschiene
- 5: Schlitten
- 6: Steuergerät
- 7: motorische Antriebseinheit
- 8: Stellglied
- 9: Hindernis
- 10: Hydraulikpumpe
- 11a: hintere Position Schlitten
- 11b: vordere Position Schlitten
- 12: Abstandssensor
- 13: Fahrerhaus
- 14: Auflieger
- 15: Aufliegerfront
- 16a, b: Blockierstück Stellglied
- 17: Messkeule

- X₁: erster Reaktionsabstand
- X₂: zweiter Reaktionsabstand
- W: Spaltweite Zugfahrzeug/Auflieger
- W₁: minimale Spaltweite
- W₂: maximale Spaltweite

## Patentansprüche

1. Verfahren zur Steuerung einer Verschiebeeinrichtung (1) für eine auf einem Zugfahrzeug (2) angeordnete Sattelkupplung (3),
wobei die Verschiebeeinrichtung (1)
- einen Unterbau mit mindestens einer in Fahrtrichtung ausgerichteten Führungsschiene (4),
- einen verfahrbaren Schlitten (5), welcher die Sattelkupplung (3) trägt und an der Führungsschiene (4) angreift, sowie
- ein Steuergerät (6) umfasst, an welches eine motorische Antriebseinheit (7) zum Verfahren des Schlittens (5) und ein Stellglied (8) zum Fixieren des Schlittens (5) gegenüber der Führungsschiene (4) angeschlossen sind,
**dadurch gekennzeichnet,**
**dass** eine Abstandsmessung zum Erfassen eines vor dem Zugfahrzeug (2) befindlichen Hindernisses (9) durchgeführt wird, das Signal der Messung in dem Steuergerät (6) zu einem Steuersignal verarbeitet und damit eine Inbetriebnahme der motorischen Antriebseinheit (7) und/oder des Stellgliedes (8) initiiert wird, wobei im Fall eines vor dem Zugfahrzeug (2) befindlichen Hindernisses (9) bereits vor der Reaktion des Fahrers Maßnahmen zum Vergrößern der Spaltweite (W) zwischen Fahrerhaus (13) und Aufliegerfront (15) eingeleitet werden.

2. Verfahren nach Anspruch 1, **dadurch gekennzeichnet, dass** bei Erreichen eines vorgebbaren ersten Reaktionsabstandes (X₁) zu dem Hindernis (9) die motorische Antriebseinheit (7) und/oder das Stellglied (8) von dem Steuergerät (6) in eine Bereitschaftsstellung geschaltet werden.

3. Verfahren nach Anspruch 2, **dadurch gekennzeichnet, dass** in der Bereitschaftsstellung eine Hydraulikpumpe (10) der motorischen Antriebseinheit (7) anläuft.

4. Verfahren nach einem der Ansprüche 1 bis 3, **dadurch gekennzeichnet, dass** bei Erreichen eines vorgebbaren zweiten Reaktionsabstandes (X2) die Fixierung des Schlittens (5) aufgehoben und der Schlitten (5) von der motorischen Antriebseinheit (7) in eine hintere Position (11a) geschoben wird.

5. Verfahren nach Anspruch 4, **dadurch gekennzeichnet, dass** der Schlitten (5) in der hinteren Position (11a) mittels des Stellgliedes (8) fixiert wird.

6. Steuerungssystem mit einer Verschiebeeinrichtung (1) für eine auf einem Zugfahrzeug (2) angeordnete Sattelkupplung (3),
wobei die Verschiebeeinrichtung (1)
- einen Unterbau mit mindestens einer in Fahrtrichtung ausgerichteten Führungsschiene (4),
- einen verfahrbaren Schlitten (5), welcher die Sattelkupplung (3) trägt und an der Führungsschiene (4) angreift, sowie
- ein Steuergerät (6) umfasst, an welches eine motorische Antriebseinheit (7) zum Verfahren des Schlittens (5) und ein Stellglied (8) zum Fixieren des Schlittens (5) gegenüber der Führungsschiene (4) angeschlossen sind,
**dadurch gekennzeichnet,**
**dass** das Steuergerät (6) mit einem Abstandssensor (12) verbunden ist, wobei der Abstandssensor (12) im Falle eines vor dem Zugfahrzeug (2) befindlichen Hindernisses (9) dem Steuergerät (6) einen Messwert bereitstellt,
und **dass** das Steuergerät (6) mit der Antriebseinheit (7) und/oder dem Stellglied (8) zusammenwirkt, wobei im Fall eines vor dem Zugfahrzeug (2) befindlichen Hindernisses (9) bereits vor der Reaktion des Fahrers Maßnahmen zum Vergrößern der Spaltweite (W) zwischen Fahrerhaus (13) und Aufliegerfront (15) eingeleitet werden.

7. Steuerungssystem nach Anspruch 6, **dadurch gekennzeichnet, dass** der Abstandssensor (12) Bestandteil des zugfahrzeugseitigen Abstandserkennungssystems ist.

8. Steuerungssystem nach Anspruch 6 oder 7, **dadurch gekennzeichnet, dass** der Abstandssensor (12) ein Radar-, Lidar- oder Infrarotsensor ist.

9. Steuerungssystem nach einem der Ansprüche 6 bis 8, **dadurch gekennzeichnet, dass** der Abstandssensor (12) Bestandteil des Spurhaltesystems des Zugfahrzeugs (2) ist.

## Claims

1. Method for controlling a displacement device (1) for a fifth wheel (3) which is arranged on a towing vehicle (2),
wherein the displacement device (1) comprises
- a substructure with at least one guide rail (4) which is orientated in the travel direction,
- a movable carriage (5) which carries the fifth wheel (3) and which engages on the guide rail (4), and
- a control device (6) to which a motorised drive unit (7) for moving the carriage (5) and an actuation member (8) for fixing the carriage (5) relative to the guide rail (4) are connected, **characterised in that**
a distance measurement for detecting an obstacle (9) in front of the towing vehicle (2) is carried out, the signal of the measurement is processed in the control device (6) to form a control signal and consequently a start-up of the motorised drive unit (7) and/or the actuation member (8) is initiated, wherein, in the event of an obstacle (9) being located in front of the towing vehicle (2), before the reaction of the driver measures are already initiated in order to increase the gap width (W) between the driver's cab (13) and semitrailer front (15).

2. Method according to claim 1, **characterised in that**, when a predeterminable first reaction distance (X₁) with respect to the obstacle (9) is reached, the motorised drive unit (7) and/or the actuation member (8) is/are switched by the control device (6) into a standby position.

3. Method according to claim 2, **characterised in that** in the standby position a hydraulic pump (10) of the motorised drive unit (7) starts up.

4. Method according to any one of claims 1 to 3, **characterised in that**, when a predeterminable second reaction distance (X2) is reached, the fixing of the carriage (5) is cancelled and the carriage (5) is pushed by the motorised drive unit (7) into a rear position (11a).

5. Method according to claim 4, **characterised in that** the carriage (5) is fixed in the rear position (11a) by means of the actuation member (8).

6. Control system having a displacement device (1) for a fifth wheel (3) which is arranged on a towing vehicle (2),
wherein the displacement device (1) comprises
- a substructure with at least one guide rail (4) which is orientated in the travel direction,
- a movable carriage (5) which carries the fifth wheel (3) and which engages on the guide rail (4), and
- a control device (6) to which a motorised drive unit (7) for moving the carriage (5) and an actuation member (8) for fixing the carriage (5) relative to the guide rail (4) are connected, **characterised in that**
the control device (6) is connected to a distance sensor (12), wherein the distance sensor (12), in the event of an obstacle (9) being located in front of the towing vehicle (2), provides a measurement value for the control device (6),
and **in that** the control device (6) cooperates with the drive unit (7) and/or the actuation member (8), wherein, in the event of an obstacle (9) being located in front of the towing vehicle (2), before the reaction of the driver measures are already initiated in order to increase the gap width (W) between the driver's cab (13) and semitrailer front (15).

7. Control system according to claim 6,
**characterised in that** the distance sensor (12) is a component of the towing-vehicle-side distance identification system.

8. Control system according to claim 6 or claim 7, **characterised in that** the distance sensor (12) is a radar, lidar or infrared sensor.

9. Control system according to any one of claims 6 to 8, **characterised in that** the distance sensor (12) is a component of the lane departure warning system of the towing vehicle.

## Revendications

1. Procédé de commande d'un dispositif de coulissement (1) destiné à une sellette d'attelage (3) implantée sur un véhicule tracteur (2),
ledit dispositif de coulissement (1) comprenant
- une structure inférieure, munie d'au moins un rail de guidage (4) orienté dans une direction de déplacement,
- un chariot déplaçable (5), qui porte ladite sellette d'attelage (3) et vient en prise avec ledit rail de guidage (4),
- ainsi qu'un appareil de commande (6) auquel sont raccordés une unité d'entraînement motorisé (7), conçue pour déplacer le chariot (5), et un organe de manoeuvre (8) dévolu au blocage à demeure dudit chariot (5) par rapport audit rail de guidage (4),
**caractérisé par le fait**
**qu'**il s'opère une mesure de distance visant à détecter un obstacle (9) situé devant le véhicule tracteur (2), le signal de la mesure étant transformé en un signal de commande, dans l'appareil de commande (6), une mise en fonction de l'unité d'entraînement motorisé (7) et/ou de l'organe de manoeuvre (8) s'en trouvant ainsi amorcée, sachant que, dans le cas d'un obstacle (9) situé devant ledit véhicule tracteur (2), des mesures sont déclenchées, avant même la réaction du conducteur, en vue d'accroître la largeur (W) de l'intervalle entre la cabine (13) dudit conducteur et la région frontale (15) de la semi-remorque.

2. Procédé selon la revendication 1, **caractérisé par le fait que** l'unité d'entraînement motorisé (7), et/ou l'organe de manoeuvre (8), est (sont) commuté(e)(s) vers une position d'attente, par l'appareil de commande (6), lorsqu'est atteinte une première distance de réaction (X₁) pouvant être préétablie par rapport à l'obstacle (9).

3. Procédé selon la revendication 2, **caractérisé par le fait qu'**une pompe hydraulique (10) de l'unité d'entraînement motorisé (7) entre en action dans la position d'attente.

4. Procédé selon l'une des revendications 1 à 3, **caractérisé par le fait que**, lorsqu'est atteinte une seconde distance de réaction (X₂) pouvant être préétablie, le blocage à demeure du chariot (5) est neutralisé et ledit chariot (5) est mû vers un emplacement postérieur (11a), par l'unité d'entraînement motorisé (7).

5. Procédé selon la revendication 4, **caractérisé par le fait que** le chariot (5) est bloqué à demeure à l'emplacement postérieur (11a) au moyen de l'organe de manoeuvre (8).

6. Système de commande équipé d'un dispositif de coulissement (1) destiné à une sellette d'attelage (3) située sur un véhicule tracteur (2),
ledit dispositif de coulissement (1) comprenant
- une structure inférieure, munie d'au moins un rail de guidage (4) orienté dans une direction de déplacement,
- un chariot déplaçable (5), qui porte ladite sellette d'attelage (3) et vient en prise avec ledit rail de guidage (4),
- ainsi qu'un appareil de commande (6) auquel sont raccordés une unité d'entraînement motorisé (7), conçue pour déplacer le chariot (5), et un organe de manoeuvre (8) dévolu au blocage à demeure dudit chariot (5) par rapport audit rail de guidage (4),
**caractérisé par le fait**
**que** l'appareil de commande (6) est raccordé à un capteur de distances (12), lequel capteur de distances (12) fournit une valeur de mesure audit appareil de commande (6) dans le cas d'un obstacle (9) situé devant le véhicule tracteur (2) ;
et par le fait que ledit appareil de commande (6) coopère avec l'unité d'entraînement (7) et/ou avec l'organe de manoeuvre (8), sachant que, dans le cas d'un obstacle (9) situé devant ledit véhicule tracteur (2), des mesures sont déclenchées, avant même la réaction du conducteur, en vue d'accroître la largeur (W) de l'intervalle entre la cabine (13) dudit conducteur et la région frontale (15) de la semi-remorque.

7. Système de commande selon la revendication 6, **caractérisé par le fait que** le capteur de distances (12) fait partie intégrante du système de repérage de distances situé côté véhicule tracteur.

8. Système de commande selon la revendication 6 ou 7, **caractérisé par le fait que** le capteur de distances (12) est un capteur radar, lidar, ou à infrarouges.

9. Système de commande selon l'une des revendications 6 à 8, **caractérisé par le fait que** le capteur de distances (12) fait partie intégrante du système de maintien de trajectoires du véhicule tracteur (2).
